# EUROPEAN PATENT SPECIFICATION

(11) **EP 1 905 568 B1**
(45) Date of publication and mention of the grant of the patent: **26.12.2018**
(21) Application number: 06768349.0
(22) Date of filing: 21.07.2006
(51) Int. Cl.: B29C 45/76, B29C 45/43, B29C 45/72, B29L 17/00, B29C 45/00

(54) **MOLDING MACHINE CONTROL UNIT AND METHOD OF MOLDING WITH USE OF MOLDING MACHINE EQUIPPED WITH THE UNIT**
STEUEREINHEIT FÜR SPRITZGIESSMASCHINE UND SPRITZGIESSVERFAHREN UNTER VERWENDUNG DER MIT DER EINHEIT AUSGESTATTETEN SPRITZGIESSMASCHINE
UNITE DE COMMANDE DE MACHINE A MOULER ET PROCEDE DE MOULAGE METTANT EN OEUVRE UNE MACHINE A MOULER EQUIPEE D'UNE TELLE UNITE

(30) Priority: 21.07.2005 JP 2005210908
(43) Date of publication of application: 02.04.2008
(73) Proprietor: SUMITOMO HEAVY INDUSTRIES, LTD., Shinagawa-ku, Tokyo 141-8686 (JP)
(72) Inventor: MASUDA, Moto c/o SUMITOMO HEAVY INDUSTRIES, LTD.,, Chiba-shi, Chiba 2630001 (JP); HIRANO, Hideomi c/o SUMITOMO HEAVY INDUSTRIES,, ku, Chiba-shi, Chiba 2630001 (JP); ISHIKAWA, Sousuke c/o SUMITOMO HEAVY INDUSTRIES,, ku, Chiba-shi, Chiba 2630001 (JP)
(74) Representative: Emde, Eric
(86) International application number: PCT/JP2006/314471
(87) International publication number: WO 2007/011020

(56) References cited:
- JP-A- 11 086 357
- JP-A- 2001 129 863
- JP-A- 2001 205 674
- JP-A- 2004 338 178
- US-B1- 6 572 797

## Description

### TECHNICAL FIELD

The present invention relates to a molding machine with a control apparatus and to a molding method for a molding machine.

### BACKGROUND ART

Conventionally, in a molding machine; for example, in an injection-molding machine, resin heated and melted in a heating cylinder is injected under high pressure and charged into a cavity of a mold apparatus, and the injected resin is cooled and solidified in the cavity. Subsequently, a molded product; for example, a disk substrate, is removed from the mold apparatus.

The injection-molding machine includes the mold apparatus, a mold-clamping apparatus, an injection apparatus, etc. The mold apparatus includes a stationary mold and a movable mold. The mold-clamping apparatus includes a stationary platen and a movable platen. The movable platen is advanced and retreated through drive of a mold-clamping motor to thereby perform mold closing, mold clamping, or mold opening of the mold apparatus.

Meanwhile, the injection apparatus includes a heating cylinder for heating and melting resin fed from a hopper, and an injection nozzle for injecting the molten resin. A screw is disposed in the heating cylinder such that the screw can advance and retreat as well as rotate. In a metering step, when the screw is rotated through drive of a metering motor, resin can be metered and accumulated forward of the screw within the heating cylinder. In an injection step, when the screw is advanced through drive of an injection motor, the resin accumulated forward of the screw can be injected and charged into a cavity of the mold apparatus in a clamped state.

When mold opening is performed after the resin within the cavity is cooled to complete a molded product, an ejection motor of an ejector apparatus is driven. As a result, an ejector pin is advanced so that the molded product is ejected and separated from the mold.

Incidentally, when DVDs or the like are manufactured, two injection molding machines are operated so as to mold respective disk substrates; and the disk substrates from these injection molding machines are bonded together by use of an adhesive agent such as lacquer in a post-process machine. When an anomaly occurs in the post-process machine, the post-process machine is temporarily stopped, during which time the anomaly of the post-process machine is eliminated or maintenance is performed.

In such a case, if the injection molding machines are stopped, the molding conditions of the injection molding machines must be set, respectively, when their operations are resumed. The operation for setting the molding conditions is troublesome. Therefore, the operations of the injection molding machines are continued without being stopped.

However, during a period in which the injection molding machines are operated, disk substrates are continuously molded. Therefore, depending on the type of an anomaly of the post-process machine, the molded disk substrates cannot be used, and are discharged as scraps.

In order to reduce the amount of scraps, a molding cycle is extended by lengthening the time of a cooling step subsequent to an injection step, or by lengthening a rest time between completion of removal of a disk substrate and start of mold closing performed thereafter, to thereby reduce scraps (see, for example, JP 3589598 B or US 6,572,797 B1). US 6,572,797 B1 discloses a method of controlling operation of an injection molding system in which at least one injection molding device successively executes an injection molding operation thereof so as to successively produce the molded product, and at least one takeout device successively takes out the molded product from the corresponding injection molding device so as to successively transfer the molded product to a subsequent-step part in which the molded product is further processed, while a monitoring device is arranged for detecting an abnormal operation in the subsequent-step part and generating an abnormal signal upon detection of the abnormal signal, the method comprising the steps of: changing an operation mode of the at least one of takeout device so as to transfer the molded disk to another part which is separate from the subsequent-step part, upon generation of the abnormal signal by the monitoring device; and extending a cycle time of the injection molding operation of the at least one injection molding device upon generation of the abnormal signal by the monitoring device.

### DISCLOSURE OF THE INVENTION

### PROBLEMS TO BE SOLVED BY THE INVENTION

However, in the above-described conventional injection molding machines, when the cooling time is lengthened, a state of the mold apparatus being clamped continues for a long period of time, and drive of a mold-clamping motor must be continued, so that power consumption increases. When the rest time is lengthened, a state of the mold apparatus being opened continues for a long period of time, so that dust or the like may adhere to the mold apparatus. In addition, since the mold temperature drops excessively, the quality of disk substrates deteriorates in subsequent molding.

An object of the present invention is to solve the above-mentioned problems in the conventional injection molding machines, and to provide a molding machine control apparatus which can reduce power consumption when operation of a molding machine is continued in a state where a post-process machine stops and which can prevent deterioration in the quantity of molded products in subsequent molding, as well as a molding method for a molding machine.

### MEANS FOR SOLVING THE PROBLEMS

In order to achieve the above object, a molding machine with a control apparatus according to the present invention is provided as set forth in claim 1. Moreover, a molding method for a molding machine according to the present invention is provided as set forth in claim 6. Preferred embodiments of the present invention may be gathered from the dependent claims.

### EFFECT OF THE INVENTION

According to the present invention, when the cycle extension mode is set, the time between start of the plasticization retreat and completion of the plasticization advancement is made longer than that in the case where the normal mode is set, to thereby extend the molding cycle. Therefore, during that period, a drive section for mold clamping does not have to generate mold-clamping force. Accordingly, power consumption can be reduced.

Further, since the movable mold is in contact with the stationary mold during that time, dust or the like does not adhere to the mold apparatus. In addition, since the rest time is not required to increase so as to extend the molding cycle, the mold temperature does not drop excessively. Accordingly, changeover to the normal molding mode can be readily performed in subsequent molding, whereby productivity and the quality of molded products can be improved.

### BRIEF DESCRIPTION OF DRAWINGS

FIG. 1 is a view showing a molding system according to an embodiment of the present invention.
FIG. 2 is a block diagram of a control circuit according to the embodiment of the present invention.
FIG. 3 is a schematic view of an injection molding machine according to the embodiment of the present invention.
FIG. 4 is a time chart showing operation of the injection molding machine according to the embodiment of the present invention.

### BEST MODE FOR CARRYING OUT THE INVENTION

The embodiment of the present invention will next be described in detail with reference to the drawings. Notably, in the following description, there will be described a molding machine control apparatus which molds disk substrates (molded products) by use of an injection molding machine serving as a molding machine.

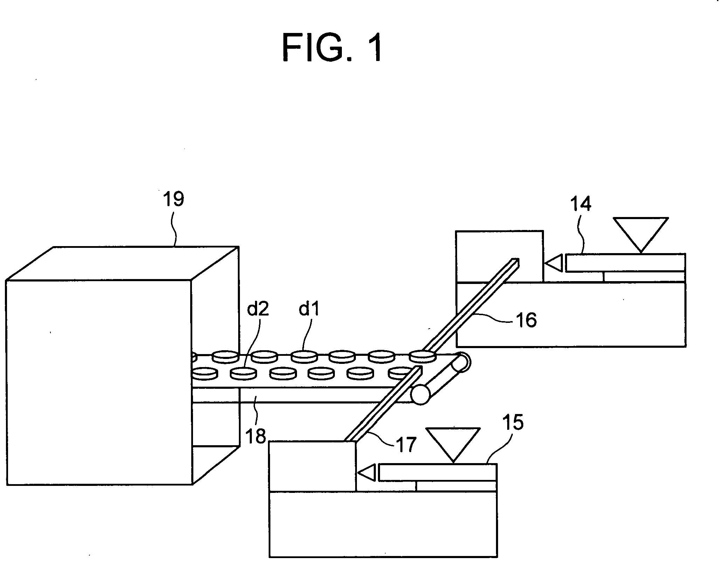

FIG. 1 is a view showing a molding system according to the embodiment of the present invention.

In FIG. 1, reference numerals 14 and 15 denote a plurality of injection molding machines (first and second injection molding machines in the present embodiment); 16 and 17 denote arms of take-out machines for removing disk substrates d1 and d2 formed in the first and second injection molding machines 14 and 15; 18 denotes a conveyer (transfer apparatus) for transferring the disk substrates d1 and d2; and 19 denotes a post-process machine. In the present embodiment, the post-process machine 19 bonds the disk substrates d1 and d2 together so as to produce a DVD or the like. Notably, in the post-process machine 19, other processes may be performed after the disk substrates d1 and d2 are bonded together.

Next, the first and second injection molding machines 14 and 15 will be described. Since the first and second injection molding machines 14 and 15 have the same structure, only the first injection molding machine 14 will be described.

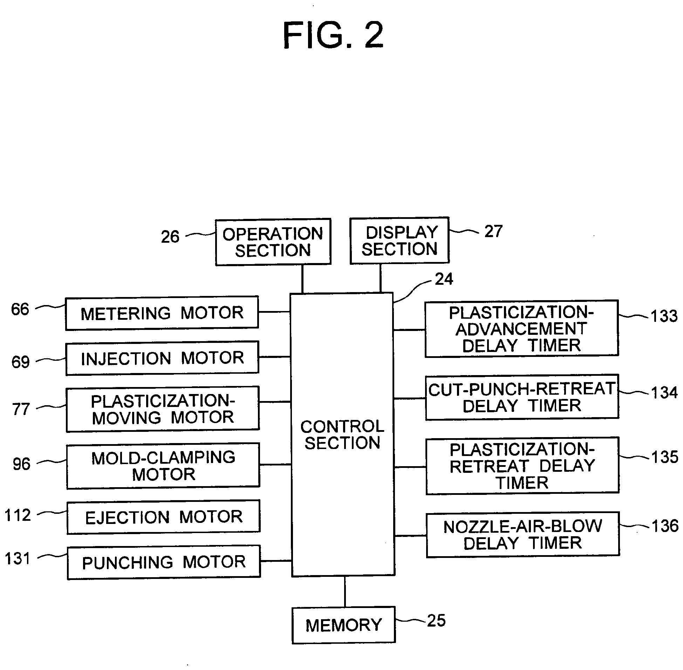

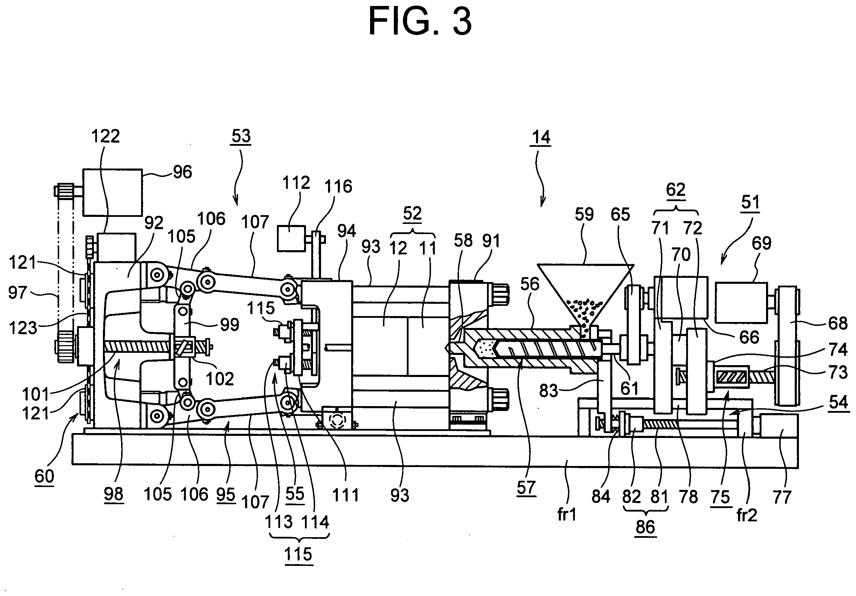

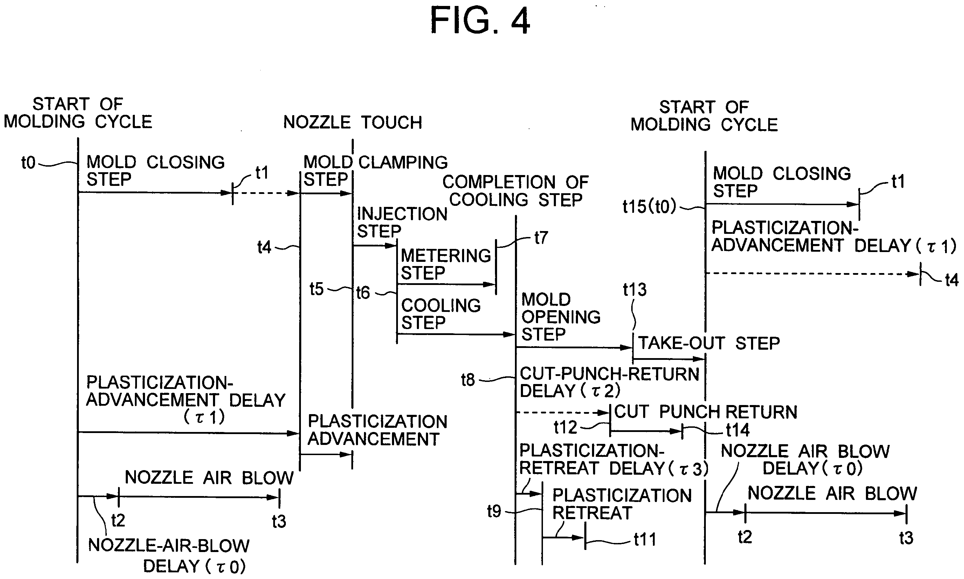

FIG. 2 is a block diagram of a control circuit according to the embodiment of the present invention. FIG. 3 is a schematic view of an injection molding machine according to the embodiment of the present invention. FIG. 4 is a time chart showing operation of the injection molding machine according to the embodiment of the present invention.

In these drawings, reference numeral 51 denotes an injection apparatus; 52 denotes a mold apparatus composed of a stationary mold (first mold) 11 and a movable mold (second mold) 12 and forming a cavity between the stationary mold 11 and the movable mold 12; 53 denotes a mold-clamping apparatus disposed in opposition to the injection apparatus 51; 54 denotes a plasticization-moving apparatus which supports the injection apparatus 51 for advancing and retreating movements and which performs plasticization advancement by advancing the injection apparatus 51 and plasticization retreat by retreating the injection apparatus 51; 55 denotes an ejector apparatus; 60 denotes a mold-thickness adjustment apparatus, functioning as a toggle adjustment apparatus; and fr1 denotes a molding machine frame which supports the injection apparatus 51, the mold-clamping apparatus 53, the plasticization-moving apparatus 54, etc.

The injection apparatus 51 includes a heating cylinder (cylinder member) 56; a screw (injection member) 57 disposed in the heating cylinder 56 such that the screw can rotate, advance, and retreat; an injection nozzle 58 attached to the front end of the heating cylinder 56; a hopper 59 which is disposed in the vicinity of the rear end of the heating cylinder 56, and which stores resin (molding material) and supplies the resin to the interior of the heating cylinder 56; a screw shaft 61 projecting from the rear end of the screw 57; a pressure plate 62 which includes front and rear support portions 71 and 72 connected together via a load cell (load detection section) 70, which is disposed to be advanceable and retreatable, and which rotatably supports the screw shaft 61; a metering motor (drive section for metering) 66 attached to the front support portion 71 and connected to the screw shaft 61 via a pulley-belt-type rotation transmission system (composed of a drive pulley (drive element), a driven pulley (driven element), and a timing belt (transmission member) extending between and wound around the drive pulley and the driven pulley) 65; an injection motor (drive section for injection) 69 attached to the molding machine frame fr1 and connected to a ball screw (motion-direction conversion section) 75 via a pulley-belt-type rotation transmission system (composed of a drive pulley (drive element), a driven pulley (driven element), and a timing belt (transmission member) extending between and wound around the drive pulley and the driven pulley) 68; etc. The ball screw 75 functions as a motion-direction conversion section for converting rotational motion to rectilinear motion, and includes a ball screw shaft (first conversion element) 73 connected to the rotation transmission system 68, and a ball nut (second conversion element) 74 attached to the rear support portion 72 and meshed with the ball screw shaft 73.

The plasticization-moving apparatus 54 includes an injection apparatus frame fr2; a plasticization-moving motor (drive section for plasticizing and moving) 77 attached to the injection apparatus frame fr2; a guide 78 disposed along the longitudinal direction of the injection apparatus frame fr2 so as to guide the pressure plate 62; a ball screw shaft (first conversion element) 81 rotatably disposed on the injection apparatus frame fr2 and rotated by means of driving the plasticization-moving motor 77; a ball nut (second conversion element) 82 meshing with the ball screw shaft 81; a bracket 83 attached to the rear end of the heating cylinder 56; a spring (urging member) 84 disposed between the ball nut 82 and the bracket 83; etc. Notably, the ball screw shaft 81 and the ball nut 82 constitute a ball screw 86, which functions as a motion-direction conversion section for converting rotational motion to rectilinear motion.

The mold-clamping apparatus 53 includes a stationary platen (first platen) 91 attached to the molding machine frame fr1; a toggle support (base plate) 92; tie bars 93 extending between the stationary platen 91 and the toggle support 92; a movable platen (second platen) 94 disposed in opposition to the stationary platen 91 such that the movable platen can advance and retreat along the tie bars 93; a toggle mechanism 95 disposed between the movable platen 94 and the toggle support 92; a mold-clamping motor (drive section for mold clamping) 96; a pulley-belt-type rotation transmission system (composed of a drive pulley (drive element), a driven pulley (driven element), and a timing belt (transmission member) extending between and wound around the drive pulley and the driven pulley) 97 for transmitting to the toggle mechanism 95 rotation generated upon drive of the mold-clamping motor 96; a ball screw 98 connected to the rotation transmission system 97; a crosshead 99 connected to the ball screw 98; etc. The stationary mold 11 and the movable mold 12 are attached to the stationary platen 91 and the movable platen 94, respectively, to face each other.

The ball screw 98 functions as a motion-direction conversion section for converting rotational motion to rectilinear motion, and includes a ball screw shaft (first conversion element) 101 connected to the rotation transmission system 97, and a ball nut (second conversion element) 102 attached to the crosshead 99 and meshing with the ball screw shaft 101.

The toggle mechanism 95 includes toggle levers 105 swingably supported on the crosshead 99; toggle levers 106 swingably supported on the toggle support 92; and toggle arms 107 swingably supported on the movable platen 94. The toggle levers 105 and the toggle levers 106 are mutually link-connected; and the toggle levers 106 and the toggle arms 107 are mutually link-connected.

The toggle mechanism 95 operates as follows. When the crosshead 99 is advanced or retreated between the toggle support 92 and the movable platen 94 by means of driving the mold-clamping motor 96, the movable platen 94 advances or retreats along the tie bars 93 so as to bring the movable mold 12 into contact with the stationary mold 11 or separate the movable mold 12 from the stationary mold 11, to thereby perform mold closing, mold clamping, or mold opening of the mold apparatus 52.

The ejector apparatus 55 includes a crosshead 111 disposed on the rear end surface of the movable platen 94 such that the crosshead 111 can advance and retreat in relation to the movable platen 94; an ejection motor (drive section for ejection) 112; a ball screw shaft (first conversion element) 113 rotatably disposed on the crosshead 111; a ball nut (second conversion element) 114 attached to the crosshead 111 and meshing with the ball screw shaft 113; a pulley-belt-type rotation transmission system (composed of a drive pulley (drive element), a driven pulley (driven element), and a timing belt (transmission member) extending between and wound around the drive pulley and the driven pulley) 116 for transmitting to the ball screw shaft 113 rotation generated upon drive of the ejection motor 112; an ejector rod and ejector pins, both not shown, which are advanced and retreated with advancement and retreat of the crosshead 111; etc. Notably, the ball screw shaft 113 and the ball nut 114 constitute a ball screw 115, which functions as a motion-direction conversion section for converting rotational motion to rectilinear motion.

The mold-thickness adjustment apparatus 60 includes adjustment nuts (each serving as a toggle adjustment member and a mold-thickness adjustment member) 121 meshed with unillustrated screw portions formed at the rear ends of the tie bars 93; a mold-thickness motor (serving as a drive section for toggle adjustment and a drive section for mold-thickness adjustment) 122; a timing belt (transmission member) 123 for transmitting to the adjustment nuts 121 rotation generated upon drive of the mold-thickness motor 122; etc. The mold-thickness adjustment apparatus 60 advances or retreats the toggle support 92 in relation to the stationary platen 91 to thereby perform mold-thickness adjustment. At that time, the reference position of the toggle mechanism 95 is also adjusted.

Notably, in the present embodiment, when the resin is charged into the cavity and cooled, a prototype of a disk substrate d1 is formed. In order to make a hole in the prototype, an unillustrated cut punch, a punching motor (drive section for punching) for advancing and retreating the cut punch, etc. are provided. When the punching motor is driven, the cut punch is advanced, so that a hole is formed in the prototype.

The first injection molding machine 14 having the above-described structure operates as follows. When the plasticization-moving motor 77 is driven, the rotation generated by the plasticization-moving motor 77 is transmitted to the ball screw shaft 81, whereby the ball nut 82 is advanced or retreated. The thrust force generated by the ball nut 82 is transmitted to the bracket 83 via the spring 84, whereby the injection apparatus 51 is advanced or retreated.

In a metering step, the metering motor 66 is driven. The rotation generated by the metering motor 66 is transmitted to the screw shaft 61 via the rotation transmission system 65, whereby the screw 57 is rotated. As a result, the resin, which is supplied from the hopper 59 and which is heated and melted within the heating cylinder 56, is caused to move forward, and is accumulated forward of the screw 57. With this, the screw 57 is retreated to a predetermined position.

In an injection step, the injection nozzle 58 is pressed against the stationary mold 11, and the injection motor 69 is driven so as to rotate the ball screw shaft 73 via the rotation transmission system 68. At this time, the pressure plate 62 moves, as the ball screw 73 rotates, and advances the screw 57. As a result, the resin accumulated forward of the screw 57 is injected from the injection nozzle 58, and charged into a cavity formed between the stationary mold 11 and the movable mold 12. The load cell 70 receives the reaction generated at that time, and detects the pressure.

The mold-clamping apparatus 53 and the ejector apparatus 55 operate as follows. When the mold-clamping motor 96 is driven, the rotation generated by the mold-clamping motor 96 is transmitted to the ball screw shaft 101 via the rotation transmission system 97, whereby the ball nut 102 is advanced or retreated together with the crosshead 99. When the crosshead 99 advances, the toggle mechanism 95 is extended, whereby the movable platen 94 is advanced to perform mold closing, and the movable mold 12 comes into contact with the stationary mold 11. As a result, a cavity is formed between the stationary mold 11 and the movable mold 12. Subsequently, when the mold-clamping motor 96 is further driven, the toggle mechanism 95 generates a mold clamping force, with which the movable mold 12 is pressed against the stationary mold 11. When the crosshead 99 retreats, the toggle mechanism 95 is contracted, whereby the movable platen 94 is retreated to perform mold opening.

When the cut punch is advanced through drive of the punching motor, a hole is formed in the prototype, whereby a disk substrate d1 is formed. Further, when the crosshead 111 is advanced through drive of the ejection motor 112 in the course of mold opening, the ejector pins are advanced, and the disk substrate d1 is ejected.

At that time, an unillustrated take-out machine is operated, so that the disk substrate d1 is grasped and removed by the arm 16.

Next, control circuits will be described. In this case as well, only the control circuit of the first injection molding machine 14 will be described, because the control circuits of the first and second injection molding machines 14 and 15 have the same configuration.

In FIG. 2, reference numeral 24 denotes a control section provided in the first injection molding machine 14. The control section 24 is composed of an unillustrated CPU (processing apparatus), and functions as a computer on the basis of various data to thereby perform various types of processing. Notably, in place of the CPU, an MPU may be used as the processing apparatus. Reference numeral 25 denotes memory such as RAM, ROM, flash memory, or the like. Reference numeral 26 denotes an operation section equipped with operating elements such as switches, keys, and buttons. Reference numeral 27 denotes a display section equipped with a display, lamps, etc. The operation section 26 and the display section 27 are disposed on an unillustrated operation panel. Notably, a touch panel in which the operation section 26 and the display section 27 are integrated together may be used.

Reference numeral 66 denotes the metering motor; 69 denotes the injection motor; 77 denotes the plasticization-moving motor; 96 denotes the mold-clamping motor; 112 denotes the ejection motor; and 131 denotes the punching motor. Further, first to fourth delay timers; i.e., a plasticization-advancement delay timer 133, a cut-punch-retreat delay timer 134, a plasticization-retreat delay timer 135, and a nozzle-air-blow delay timer 136, are connected to the control section 24.

Incidentally, when it is determined that an anomaly occurs in, for example, the post-process machine 19 (FIG. 1) or its maintenance is needed, the post-process machine 19 is temporarily stopped, during which time the anomaly of the post-process machine 19 is eliminated or maintenance is performed.

In such a case, if the first and second injection molding machines 14 and 15 are stopped, the molding conditions of the first and second injection molding machines 14 and 15 must be set respectively when their operations are resumed. The operation for setting is troublesome. Therefore, the operations of the first and second injection molding machines 14 and 15 are continued without being stopped.

However, during a period in which the first and second injection molding machines 14 and 15 are operated, disk substrates d1 and d2 are continuously molded. Therefore, depending on the type of an anomaly of the post-process machine 19, the molded disk substrates d1 and d2 cannot be used, and are discharged as scraps. In view of this, in the present embodiment, when the first and second injection molding machines 14 and 15 are operated, their molding cycles are lengthened so as to reduce the amount of scraps.

For such purpose, the first and second injection molding machines 14 and 15 are operated in a normal mode in which a normal molding cycle is used, and a cycle extension mode in which the molding cycle is extended as compared with that in the normal mode.

In the present embodiment, unillustrated mode-setting processing means (a mode-setting processing section) of the control section 24 of each of the first and second injection molding machines 14 and 15 performs mode setting processing. That is, when a status signal; i.e., a signal representing the status of the post-process machine 19 or the like, is received, the mode-setting processing means sets a mode on the basis of the status signal.

That is, when the post-process machine 19 or the like is operated, a normal signal, serving as a status signal, is fed from the post-process machine 19 or the like to the control section 24, and the mode-setting processing means sets the normal mode. When the post-process machine 19 or the like is stopped, a stop signal, serving as a status signal, is fed from the post-process machine 19 or the like to the control section 24, and the mode-setting processing means sets the cycle extension mode.

In the present embodiment, the normal mode or the cycle extension mode is selected on the basis of the status signal. However, an operator may visually check the status of the post-process machine 19 or the like, and select the normal mode or the cycle extension mode. In this case, buttons for mode selection are provided on the operation section 26, which enables the operator to select one of the normal mode and the cycle extension mode by pressing the corresponding button. Alternatively, a mode selection screen may be formed on the display section 27, which enables the operator to perform the mode selection by clicking a desired mode on a menu displayed on the mode section screen.

When the cycle extension mode is set, unillustrated cycle-extension processing means (a cycle-extension processing section) of the control section 24 performs cycle-extension processing to thereby extend the molding cycle.

For such extension, delay-setting processing means (a delay-setting processing section) of the cycle-extension processing means performs delay-setting processing. That is, on the basis of the conditions set by the operator, the delay-setting processing means sets a delay time τ1 for performing plasticization-advancement delay to the plasticization-advancement delay timer 133, a delay time τ2 for performing cut-punch-return delay to the cut-punch-retreat delay time 134, a delay time τ3 for performing plasticization-retreat delay to the plasticization-retreat delay timer 135, and a delay time τ0 for performing nozzle-air-blow delay to the nozzle-air-blow delay timer 136. Notably, the time between start of the plasticization retreat and start of plasticization advancement can be increased by increasing the delay time τ1. Further, the cycle time can be extended by increasing the delay time τ2.

Delay processing means (a delay processing section) of the cycle-extension processing means performs delay processing such that when the delay time τ0 elapses after a mold closing step is started, nozzle air blow is performed; when the delay time τ1 elapses after the mold closing step is started, plasticization advancement is performed; and when the delay time τ2 elapses after a mold opening step is started, cut punch return is performed; and when the delay time τ3 elapses, plasticization retreat is performed.

Plasticization-moving-condition-change processing means (a plasticization-moving-condition-change processing section) of the cycle-extension processing means performs plasticization-moving-condition-change processing to thereby change plasticization-moving conditions. That is, the plasticization-moving-condition-change processing means lengthens a time over which plasticization advancement and plasticization retreat are performed, by lowering plasticization moving speed represented by rotational speed of the plasticization-moving motor 77.

Incidentally, when the molding cycle becomes longer as described above, in a metering step, the pressure of resin within the heating cylinder 56 becomes unstable. In view of this, in order to stabilize the pressure of resin within the heating cylinder 56, metering-condition-change processing means (a metering-condition-change processing section) of the cycle-extension processing means performs metering-condition-change processing to thereby change metering conditions; i.e., conditions in the metering step. That is, the metering-condition-change processing means moves the metering end position of the screw 57 rearward, increases a suck-back amount, which represents a distance of a suck back from the metering end position, and adjusts a suck-back speed, which represents a speed at which a suck back is performed, or the like.

Further, when the molding cycle becomes longer, the temperatures of the mold apparatus 52 and the resin become unstable, and the disk substrates d1, d2 become likely to adhere to the inner circumferential surface of the corresponding cavity. In view of this, in order to prevent difficulty in removal of the disk substrates dl, d2 from the mold apparatus 52, mold-opening-closing-condition-change processing means (a mold-opening-closing-condition-change processing section) of the cycle-extension processing means performs mold-opening-closing-condition-change processing to thereby change mold-opening-closing-conditions; i.e., conditions in the mold closing step and the mold opening step. That is, the mold-opening-closing-condition-change processing means lowers the moving speed of the movable platen 94; i.e., mold-closing speed and mold-opening speed.

Further, in order to prevent difficulty in removal of the disk substrates dl, d2 from the mold apparatus 52, unillustrated release processing means (a release processing section) of the control section 24 performs release processing. That is, the release processing means performs mold air blow so as to jet to the mold apparatus 52 cooling air from an unillustrated air blow apparatus, to thereby cool the disk substrates dl, d2 via the mold apparatus 52, whereby the releasability is enhanced.

Notably, since the metering conditions, the mold-opening-closing conditions, etc. are changed when the cycle extension processing is performed, monitor setting must be performed differently from the monitor setting in a case where the normal mode is set. Therefore, unillustrated monitor processing means of the control section 24 performs monitor processing. That is, the monitor processing means forms a monitor setting screen on the display section 27 so as to perform monitor setting (molding cycle, charging pressure, etc.) which differ from the monitor setting in the case where the normal mode is set.

Next, operations of the first and second injection molding machines 14 and 15 will be described with reference to FIG. 4.

When a molding cycle is started at timing t0, unillustrated mold-closing processing means (a mold-closing processing section) of the control section 24 performs mold-closing processing. That is, the mold-closing processing means drives the mold-clamping motor 96 so as to start a mold-closing step at the mold-clamping apparatus 53.

Subsequently, in the normal mode, when the movable mold 12 is brought into contact with the stationary mold 11 at timing t2, the mold-closing step is completed, and unillustrated mold-clamping processing means (a mold-clamping processing section) of the control section 24 performs mold-clamping processing so as to start a mold-clamping step. Simultaneously, unillustrated plasticization-moving processing means (a plasticization-moving processing section) of the control section 24 performs plasticization-moving processing so as to start plasticization advancement.

In contrast, in the cycle extension mode, the above-described delay processing means starts clocking by the above-mentioned plasticization-advancement delay timer 133 when the mold-closing step is started, and starts plasticization-advancement delay. Subsequently, when at timing t2 the movable mold 12 has reached a contact position at which the movable mold 12 comes into contact with the stationary mold 11 without mold closing force applied thereto, the mold-closing processing means drives the mold-clamping motor 96, in a state where no mold closing force acts, until the above-mentioned delay time τ1 elapses, to thereby hold the position of the movable mold 12. As a result, the movable mold 12 is continuously brought into contact with the stationary mold 11. When the delay time τ1 has elapsed, at timing t4, the above-described delay processing means ends the plasticization-advancement delay, and the above-described mold-closing processing means drives the mold-clamping motor 96 so as to place the movable mold 12 at a fully closed position, and press the same against the stationary mold 11 with a predetermined mold closing force, to thereby complete the mold-closing step.

Further, the above-described delay processing means starts clocking by the above-mentioned nozzle-air-blow delay timer 136 when the mold-closing step is started, and starts nozzle-air-blow delay. Subsequently, when the delay time τ0 has elapsed, at timing t2, the above-described delay processing means ends the nozzle-air-blow delay.

Next, at timing t2, unillustrated nozzle-cooling processing means (a nozzle-cooling processing section) of the control section 24 performs nozzle-cooling processing so as to start nozzle air blow. That is, the nozzle-cooling processing means starts jetting of cooling air to the injection nozzle 58 from an unillustrated air blow apparatus. Notably, in the present embodiment, the air blow apparatus is disposed on the stationary platen 91 or the stationary mold 11; however, it may be disposed on the injection nozzle 58.

In this case, since cooling air is jetted to the injection nozzle 58, leakage of resin from the injection nozzle 58 can be prevented. Therefore, it is possible to prevent generation of misalignment of the injection nozzle 58 at the time of retouching of the injection nozzle 58. Then, at timing t3, the nozzle-cooling processing means ends the nozzle air blow.

Notably, in the present embodiment, when the movable mold 12 reaches the contact position, the position of the movable mold 12 is held in a state where no mold closing force is applied thereto. However, the movable mold 12 may be pressed against the stationary mold 11 with a force smaller than the mold closing force when the movable mold 12 reaches a predetermined position between the contact position and the fully closed position.

Subsequently, at timing t4, the above-described mold-clamping processing means starts a mold-clamping step and further drives the mold-clamping motor 96 to thereby perform mold clamping. Simultaneously, the above-described plasticization-moving processing means drives the plasticization-moving motor 77, and starts plasticization advancement, to thereby advance the injection apparatus 51.

When at timing t5 the injection nozzle 58 comes into contact with the stationary mold 11 to thereby perform nozzle touch, the above-described plasticization-moving processing means ends the plasticization advancement, and the mold-clamping processing means completes the mold-clamping step. Simultaneously, unillustrated injection processing means (an injection processing section) of the control section 24 performs injection processing so as to start an injection step. That is, the injection processing means drives the injection motor 69 so as to advance the screw 57 to thereby inject the resin, which is then charged into the cavity.

Next, at timing t6, the injection processing means completes the injection step, and unillustrated mold-cooling processing means (a mold-cooling processing section) of the control section 24 performs mold-cooling processing so as to start a cooling step. That is, the mold-cooling processing means supplies to the mold apparatus 52 cooling water (temperature regulating medium) supplied from an unillustrated temperature regulator, to thereby cool the resin within the cavity. Further, unillustrated metering processing means (a metering processing section) of the control section 24 performs metering processing so as to start a metering step. That is, the metering processing means drives the metering motor 66 so as to rotate the screw 57 to thereby perform metering. Notably, at a predetermined timing after start of the cooling step, hole-punching processing means (a hole-punching processing section) performs hole-punching processing to thereby start hole punching. That is, the hole-punching processing means drives the punching motor 131 to thereby advance the cut punch. When a previously-set amount of resin has been metered; i.e., the metering has been performed for a predetermined time after the metering step had started at timing t6, the metering processing means completes the metering step at timing t7.

Next, at timing t8, the above-described cooling processing means completes the cooling step, and unillustrated mold-opening processing means (a mold-opening processing section) of the control section 24 performs mold-opening processing so as to drive the mold-clamping motor 96 to thereby perform mold opening. Simultaneously, the above-described delay processing means starts clocking by the cut-punch-retreat delay timer 134, and starts cut-punch-return delay. Further, the delay processing means starts clocking by the plasticization-retreat delay timer 135, and starts plasticization-retreat delay.

Subsequently, when the above-mentioned delay time τ3 has elapsed at timing t9, the above-described delay processing means ends the plasticization-retreat delay, and the above-described plasticization-moving processing means drives the plasticization-moving motor 77 so as to retreat the injection apparatus 51 to thereby start plasticization retreat.

When the plasticization retreat ends at timing t11, and the delay time τ2 has elapsed at timing t12, the above-described delay processing means ends the cut-punch-return delay, and the above-described hole-punching processing means drives the hole-punching motor 131 so as to start cut punch return, to thereby retreat the cut punch. When the mold opening step is completed at timing t13, unillustrated take-out processing means (a take-out processing section) of the control section 24 performs take-out processing so as to start a take-out step. That is, the take-out processing means drives the above-described take-out machine so as to start removal of the disk substrates dl, d2.

Subsequently, when the cut punch return ends at timing t14, at timing t15 (t0), the above-described mold-closing processing means starts the next molding cycle.

Incidentally, in the present embodiment, since the metering conditions of the metering step are changed in order to lengthen the molding cycle, the metering time; i.e., the time from start to end of the metering step, increases. In the present embodiment, since the mold opening step is started upon completion of the metering step, when the metering time increases, the start of the mold opening step delays accordingly.

Since the temperature of the mold apparatus 52 decreases during that period, the plasticization retreat is performed as described above so as to prevent the resin within the injection nozzle 58 from hardening. Further, after the mold closing step is started, the nozzle air blow is started at timing t2, and is ended at timing t3, which is before the plasticization advancement is started at timing t4.

As described above, in the present embodiment, when the movable mold 12 reaches the contact position, the mold-clamping motor 96 is driven, in a state where no mold closing force acts on the movable mold 12, until the above-described delay time τ1 elapses, whereby the position of the movable mold 12 is held. Therefore, the molding cycle can be lengthened accordingly, and there can be reduced the amount of scraps produced in a period in which the first injection molding machine 14 and the post-process machine 19 are stopped.

During that period, the mold-clamping motor 96 is driven in a state where no mold closing force acts on the movable mold 12, and therefore, it is only required to generate a very small motor torque. In addition, since that period is before start of the mold-clamping step, it is not required to generate a mold clamping force. Accordingly, power consumption can be reduced.

Further, during that period, since the movable mold 12 is in contact with the stationary mold 11, dust or the like does not adhere to the mold apparatus 52. In addition, since the time of the cooling step; i.e., the rest time, is not required to be increased in order to lengthen the molding cycle, the temperature of the mold apparatus 52 does not drop excessively. Accordingly, in subsequent molding, changeover to the normal molding mode can be readily performed. Therefore, productivity can be improved, and the quality of the disk substrates d1 and d2 can be improved.

Moreover, since the cut punch return is not started until the delay time τ2 elapses after start of the mold opening step, the time up to the end of the cut punch return can be lengthened, whereby the time before the molding cycle is started again can be increased. Accordingly, the molding cycle can be lengthened by an amount corresponding to the amount by which the delay time τ2 is increased, to thereby further reduce the amount of scraps produced in the period in which the first injection molding machine 14 and the post-process machine 19 are stopped.

While the second injection molding machine 15 is operated in the cycle extension mode as described above, it becomes possible to normally perform removal of the disk substrate dl, or normally perform molding, at the first injection molding machine 14. In such a case, normal signals are fed from the first injection molding machine 14 and the post-process machine 19 to the control section 24, and the mode-setting processing means sets the normal mode.

In this case, unillustrated molding processing means (a molding processing section) of the control section 24 of the first injection molding machine 14 performs molding processing. That is, the molding processing means performs molding of a previously set number of shots, during which the disk substrates d1 and d2 are treated as defective products.

Further, in the present embodiment, there has been described an example in which two injection molding machines are used. However, the present invention can be applied to a case where a single injection molding machine is used. In this case, the post-process machine may be an inspection machine or the like.

Notably, when the second injection molding machine 15 is operated in the cycle extension mode, unillustrated cycle-extension-mode-notifying processing means (a cycle-extension-mode-notifying processing section) of the control section 24 may perform cycle-extension-mode-notifying processing so as to notify a worker, operator, or the like of the fact that the second injection molding machine 15 is operated in the cycle extension mode, at the display section 27 by means of a screen display, light, notifying sound, or the like.

The present invention is not limited to the above-described embodiment. Numerous modifications and variations of the present invention are possible within the scope of the present invention as defined by the appended claims.

### INDUSTRIAL APPLICABILITY

The present invention is applicable to injection-molding machines.

## Claims

1. A molding machine with a control apparatus, comprising:
a) an injection apparatus (51) having an injection nozzle (58);
b) a mold apparatus (52);
c) a mold-clamping apparatus (53) which is adapted to close, clamp, and open the mold apparatus (52);
d) a plasticization-moving apparatus (54) which is adapted to advance and retreat the injection apparatus (51) so as to perform plasticization advancement and plasticization retreat; and
e) a mode-setting processing means which is adapted to set, on the basis of a state of a post-process machine (19), one of a normal mode for operating a molding machine (14, 15) in accordance with a normal molding cycle and a cycle extension mode for operating the molding machine (14, 15) in accordance with a molding cycle longer than that in the normal mode;
said molding machine being **characterized by** further comprising:
f) a cycle-extension processing means which is adapted to extend the molding cycle when the cycle extension mode is set by lowering plasticization moving speed, and/or by lowering mold opening speed, during a period in which the plasticization retreat is started and is then completed, subsequently, the plasticization advancement is started and is then completed, from that in the case where the normal mode is set.

2. The molding machine with a control apparatus according to claim 1,
wherein the cycle-extension processing means is adapted to extend the molding cycle by increasing the delay time for performing plasticization-advancement delay.

3. A molding machine with a control apparatus according to claim 1, further comprising a releasing processing means which performs air blow for the mold apparatus (52).

4. A molding machine with a control apparatus according to claim 1, further a comprising nozzle-cooling processing means which starts air blow for the injection nozzle after a mold closing step is started or in a period in which plasticization advancement delay is performed.

5. A molding machine with a control apparatus according to claim 1, further comprising a molding processing means which performs molding of a previously set number of shots when the mode of a molding cycle is changed from the cycle extension mode to the normal mode.

6. A molding machine with a control apparatus according to claim 1, further comprising a cycle-extension-mode-notifying processing means which is operable when the molding machine is operated in the cycle extension mode so as to notify an operator of the fact that the molding machine is operated in the cycle extension mode.

7. A molding method for a molding machine (14, 15) including an injection apparatus (51) having an injection nozzle (58); a mold apparatus (52); a mold-clamping apparatus (53) which closes, clamps, and opens the mold apparatus (52); and a plasticization-moving apparatus (54) which advances and retreats the injection apparatus (51) so as to perform plasticization advancement and plasticization retreat,
the method being **characterized by** comprising the steps of:
a) setting, on the basis of a state of a post-process machine (19), one of a normal mode for operating the molding machine (14, 15) in accordance with a normal molding cycle and a cycle extension mode for operating the molding machine (14, 15) in accordance with a molding cycle longer than that in the normal mode; and
b) when the cycle extension mode is set, extending the molding cycle by lowering plasticization moving speed, and or by lowering mold opening speed, during a period in which the plasticization retreat is started and is then completed, subsequently, the plasticization advancement is started and is then completed, from that in the case where the normal mode is set.

## Patentansprüche

1. Formmaschine mit einer Steuervorrichtung, die Folgendes aufweist:
a) eine Einspritzvorrichtung (51) mit einer Einspritzdüse (58);
b) eine Formvorrichtung (52);
c) eine Formschließ- bzw. Formklemmvorrichtung (53), die ausgelegt ist, um die Formvorrichtung (52) zu schließen, zusammenzuklemmen und zu öffnen;
d) eine Plastifizierungsbewegungsvorrichtung (54), die ausgelegt ist, um die Einspritzvorrichtung (51) vorzuschieben und zurückzuziehen, um einen Plastifizierungsvorschub und Plastifizierungsrückzug auszuführen; und
e) ein Moduseinstellungsverarbeitungsmittel, das ausgelegt ist, um auf der Basis eines Zustands einer Nachverarbeitungsmaschine (19), entweder einen normalen Modus für die Betätigung einer Formmaschine (14, 15) gemäß einem normalen Formzyklus oder einen Zykluserweiterungsmodus für die Betätigung der Formmaschine (14, 15) gemäß einem Formzyklus der länger als der des normalen Modus ist, einzustellen;
wobei die Formmaschine **dadurch gekennzeichnet ist, dass** sie ferner Folgendes aufweist:
f) ein Zykluserweiterungsverarbeitungsmittel, das ausgelegt ist, um den Formzyklus auszudehnen bzw. zu erweitern, wenn der Zykluserweiterungsmodus eingestellt ist, und zwar durch Absenken der Plastifizierungsbewegungsgeschwindigkeit und/oder durch Absenken der Formöffnungsgeschwindigkeit während einer Periode, in der der Plastifizierungsrückzug begonnen wird und dann abgeschlossen wird, wobei nachfolgend der Plastifizierungsvorschub begonnen und dann abgeschlossen wird, und zwar im Vergleich zu dem Fall wo der normale Modus eingestellt ist.

2. Formmaschine mit einer Steuervorrichtung gemäß Anspruch 1, wobei das Zykluserweiterungsverarbeitungsmittel ausgelegt ist, um den Formzyklus zu erweitern, und zwar durch Erhöhen der Verzögerungszeit für das Ausführen der Plastifizierungsvorschubverzögerung.

3. Formmaschine mit einer Steuervorrichtung gemäß Anspruch 1, die ferner ein Freigabeverarbeitungsmittel aufweist, welches einen Luftstoß für die Formvorrichtung (52) ausführt.

4. Formmaschine mit einer Steuervorrichtung gemäß Anspruch 1, die ferner ein Düsenkühlungsverarbeitungsmittel aufweist, welches einen Luftstoß für die Einspritzdüse beginnt, nachdem ein Formschließschritt begonnen wurde oder in einer Periode, in der die Plastifizierungsvorschubverzögerung ausgeführt wird.

5. Formmaschine mit einer Steuervorrichtung gemäß Anspruch 1, die ferner ein Formverarbeitungsmittel aufweist, welches ein Formen einer zuvor eingestellten Anzahl von Beschickungen ausführt, wenn der Modus des Formzyklus von dem Zykluserweiterungsmodus zu dem normalen Modus verändert wird.

6. Formmaschine mit einer Steuervorrichtung gemäß Anspruch 1, die ferner ein Verarbeitungsmittel zur Benachrichtigung über den Zykluserweiterungsmodus aufweist, das betätigbar ist, wenn die Formmaschine in dem Zykluserweiterungsmodus betrieben wird, um einen Bediener über die Tatsache zu benachrichtigen, dass die Formmaschine in dem Zykluserweiterungsmodus betrieben wird.

7. Formverfahren für eine Formmaschine (14, 15), die eine Einspritzvorrichtung (51) aufweist, die eine Einspritzdüse (58); eine Formvorrichtung (52); eine Formklemmvorrichtung (53), die die Formvorrichtung (52) schließt, zusammenklemmt und öffnet; und eine Plastifizierungsbewegungsvorrichtung (54) aufweist, die die Einspritzvorrichtung vorschiebt und zurückzieht, um einen Plastifizierungsvorschub und Plastifizierungsrückzug auszuführen,
wobei das Verfahren durch das Aufweisen der folgenden Schritte gekennzeichnet ist:
a) Einstellen auf der Basis eines Zustands der Nachverarbeitungsmaschine (19) von entweder einem normalen Modus für den Betrieb der Formmaschine (14, 15) gemäß einem normalen Formzyklus oder von einem Zykluserweiterungsmodus für den Betrieb der Formmaschine (14, 15) gemäß einem Formzyklus, der länger als der in dem normalen Modus ist; und
b) wenn der Zykluserweiterungsmodus eingestellt ist, Erweitern des Formzyklus durch Absenken der Plastifizierungsbewegungsgeschwindigkeit und/oder durch Absenken der Formöffnungsgeschwindigkeit während einer Periode, in der der Plastifizierungsrückzug begonnen wurde und dann abgeschlossen wird, wobei nachfolgend der Plastifizierungsvorschub begonnen und dann abgeschlossen wird, und zwar im Vergleich zu dem Fall wo der normale Modus eingestellt ist.

## Revendications

1. Machine de moulage munie d'un dispositif de commande, comprenant :
a) un dispositif d'injection (51) comportant une buse d'injection (58) ;
b) un dispositif de moule (52) ;
c) un dispositif de serrage de moule (53) adapté à fermer, serrer et ouvrir le dispositif de moule (52) ;
d) un dispositif de mouvement de plastification (54) adapté à faire avancer et reculer le dispositif d'injection (51) de manière à réaliser une avance de plastification et un recul de plastification ; et
e) des moyens de traitement de mise en place de mode qui sont adaptés à mettre en place, sur la base d'un état d'une machine de post-traitement (19), l'un d'un mode normal pour actionner une machine de moulage (14, 15) conformément à un cycle de moulage normal et d'un mode à extension de cycle pour actionner la machine de moulage (14, 15) conformément à un cycle de moulage plus long que dans le mode normal ;
la machine de moulage étant **caractérisée en ce qu'**elle comprend en outre :
f) des moyens de traitement d'extension de cycle qui sont adaptés à allonger le cycle de moulage lorsque le mode à extension de cycle est mis en place en abaissant la vitesse de déplacement de plastification, et/ou en abaissant la vitesse d'ouverture de moule, pendant une période dans laquelle le recul de plastification est démarré et est ensuite achevé, et ultérieurement, l'avance de plastification est démarrée et est ensuite achevée, par rapport au cas où le mode normal est mis en place.

2. Machine de moulage munie d'un dispositif de commande selon la revendication 1,
dans laquelle les moyens de traitement d'extension de cycle sont adaptés à allonger le cycle de moulage en augmentant le retard dans la réalisation du retard d'avance de plastification.

3. Machine de moulage munie d'un dispositif de commande selon la revendication 1, comprenant en outre des moyens de traitement de libération qui réalisent un soufflage d'air pour le dispositif de moule (52).

4. Machine de moulage munie d'un dispositif de commande selon la revendication 1, comprenant en outre des moyens de traitement de refroidissement de buse qui démarrent un soufflage d'air pour la buse d'injection après le démarrage d'une étape de fermeture de moule ou dans une période dans laquelle le retard d'avance de plastification est réalisé.

5. Machine de moulage munie d'un dispositif de commande selon la revendication 1, comprenant en outre des moyens de traitement de moulage qui réalisent un moulage d'un nombre de coups réglé précédemment lorsque le mode d'un cycle de moulage est changé du mode à extension de cycle au mode normal.

6. Machine de moulage munie d'un dispositif de commande selon la revendication 1, comprenant en outre des moyens de traitement de notification de mode à extension de cycle qui sont actionnables lorsque la machine de moulage est actionnée dans le mode à extension de cycle de façon à notifier à un opérateur le fait que la machine de moulage est actionnée dans le mode à extension de cycle.

7. Procédé de moulage pour une machine de moulage (14, 15) comprenant un dispositif d'injection (51) comportant une buse d'injection (58) ; un dispositif de moule (52) ; un dispositif de serrage de moule (53) qui ferme, serre et ouvre le dispositif de moule (52) ; et un dispositif de mouvement de plastification (54) qui fait avancer et reculer dispositif d'injection (51) de manière à réaliser une avance de plastification et un recul de plastification,
le procédé étant **caractérisé en ce qu'**il comprend les étapes suivantes :
a) mettre en place, sur la base d'un état d'une machine de post-traitement (19), l'un d'un mode normal pour actionner la machine de moulage (14, 15) conformément à un cycle de moulage normal et d'un mode à extension de cycle pour actionner la machine de moulage (14, 15) conformément à un cycle de moulage plus long que dans le mode normal ; et
b) lorsque le mode à extension de cycle est mis en place, allonger le cycle de moulage en abaissant la vitesse de mouvement de plastification, ou en abaissant la vitesse d'ouverture de moule, pendant une période dans laquelle le recul de plastification est démarré et est ensuite achevé, et ultérieurement, l'avance de plastification est démarrée puis est achevée, par rapport au cas où le mode normal est mis en place.
